# EUROPEAN PATENT SPECIFICATION

(11) **EP 0 586 745 B1**
(45) Date of publication and mention of the grant of the patent: **10.01.1996**
(21) Application number: 92202701.6
(22) Date of filing: 07.09.1992
(51) Int. Cl.: B01D 71/04

(54) **Manufacturing a ceramic membrane**
Herstellung einer keramischen Membran
Fabrication d'une membrane céramique

(43) Date of publication of application: 16.03.1994
(73) Proprietor: SHELL INTERNATIONALE RESEARCH MAATSCHAPPIJ B.V., NL-2596 HR Den Haag (NL)
(72) Inventor: Burggraaf, Anthonie Jan c/o Universiteit Twente, Drienerlolaan 5 NL-7522 NB Enschede (NL); Keizer, Klaas c/o Universiteit Twente, Drienerlolaan 5 NL-7522 NB Enschede (NL); Uhlhorn, Robert Jan Reinier c/o Universit Twente, Drienerlolaan5 NL-7522 NB Enschede (NL); De Lange, Robertus Siebren Andries, Drienerlolaan 5 NL-7522 NB Enschede (NL)

(56) References cited:
- EP-A- 0 248 748
- EP-A- 0 425 252
- DE-A- 3 628 948
- CHEMICAL ABSTRACTS, vol. 108, no. 14, 4 April 1988, Columbus, Ohio, US; abstract no. 117659, page 338
- JOURNAL OF MEMBRANE SCIENCE vol. 44, no. 2/3, June 1989, pages 289 - 303 A. LABOT et al. 'SILICA MEMBRANES BY THE SOL-GEL PROCESS'

## Description

The present invention relates to manufacturing a ceramic membrane comprising a mesoporous support and a microporous top layer.

In the specification and in the claims the expression "mesoporous support" is used to refer to a support having pores with a diameter in the range of from 3 to 5 nm (nanometer) and the expression "microporous top layer" is used to refer to a top layer having pores with a diameter smaller than 2 nm.

A ceramic membrane comprising a mesoporous support and a microporous top layer is disclosed in R.J. Uhlhorn, Ceramic Membranes For Gas Separation, Thesis University of Twente, the Netherlands, ISBN 90-9003618-0, 1990.

Chemical Abstracts Vol. 108, 1988 Abstract No. 117 659 discloses coating a porous alumina support with a coating solution containing contains 10 ml TEOS, 5 ml of water and 0.1 ml aqueous HCl to obtain after heat treatment a coating having a thickness of 2µ.

It is an object of the present invention to provide a method of manufacturing a ceramic membrane having a microporous top layer which is thin and substantially free from defects.

To this end the method of manufacturing a ceramic membrane comprising a mesoporous support and a microporous top layer according to the present invention comprises forming a coating solution from a precursor solution comprising a silicon alkoxide, water, an acid and an alcohol; contacting the mesoporous support with the coating solution; drying the coated mesoporous support; and calcining the dried coated support, wherein the concentration of the silicon alkoxide in the precursor solution is in the range of from 0.01 to 0.20 mol per litre of coating solution.

The coating solution according to the present invention contains a polymerized alkoxide which is believed to be formed by partly hydrolyzing the alkoxide in the presence of water to form a polymerizable species which condenses to form the polymerized alkoxide.

It was found that when using a diluted coating solution a thin layer can be deposited and that drying is then so fast that undesired continuation of the condensation reaction is avoided. A further advantage of the method is that the coating can be applied in one step.

The following example illustrates manufacturing a ceramic membrane according to the present invention.

Prepare a precursor solution by admixing 21 ml (millilitre) of tetraethyl orthosilicate (Si(OC₂H₅)₄) to 21 ml ethanol, and add 8 ml of 1 mol/l of HNO₃ and 3 ml water. Allow the mixture to react for three hours to obtain a solution of a polymerized silicon alkoxide. Add 5 ml of the precursor solution of polymerized silicon alkoxide to 90 ml ethanol to obtain a coating solution.

Dip a standard alumina membrane (porosity 50 % and pore diameter 3 nm) in the coating solution to get a coated membrane. And heat the coated membrane at 25 °C/hour to 400 °C, followed by calcining the coated membrane at 400 °C for three hours and cooling the calcined membrane at 25 °C/hour.

The separation performance of a ceramic membrane manufactured according to the above method was evaluated as follows. The membrane was included in a membrane unit having a feed inlet, a retentate outlet and a permeate outlet. To the feed inlet a feed mixture was supplied at a temperature of 200 °C and at a pressure of 1.7 bar (absolute). The composition of the feed mixture is 50 % by volume H₂ and 50 % by volume CH₄. The permeance of H₂ was 125 Nm³/m²/day/bar (wherein Nm³ is standard cubic meter), the permeance of CH₄ 4.3 Nm³/m²/day/bar and the selectivity of H₂/CH₄ was 29.

Using a less diluted coating solution, for example a coating solution in which the concentration of the silicon alkoxide in the coating solution is about 0.4 mol/l it was found that the magnitude of the permeances and of the selectivity corresponded to the values for the mesoporous support which indicates that the top layer has defects.

The invention also relates to manufacturing a ceramic membrane having a top layer comprising a further metal, wherein to the precursor of the coating solution had been added additionally an alkoxide selected from aluminium alkoxide, titanium alkoxide and zirconium alkoxide.

Suitably the silicon alkoxide is tetraethyl orthosilicate (Si(OC₂H₅)₄), the alkoxide can furthermore be tetra-n-butoxysilane (Si(OC₄H₉)₄) or tetra(2-ethylbutoxy)silane (Si(OC₆H₁₃)₄). The aluminium alkoxide is suitably aluminium sec-butylate (Al(OC₄H₉)₃) or aluminium isopropylate (Al(OCH(CH₃)₂)₃); the titanium alkoxide is suitably butyl titanate (Ti(OC₄H₉)₄), the alkoxide can furthermore be tetraisopropyl titanate (Ti(OCH(CH₃)₂)₄); and the zirconium alkoxide is suitably zirconium tetra-n-butylate (Zr(OC₄H₉)₄), the alkoxide can furthermore be zirconium tetra-n-propylate (Zr(OC₃H₇)₄).

As alkoxides can react with enols to give chelates with elimination of water, such chelates can be used as well. The expression "alkoxides" as used in the specification and in the claim is used to refer as well to alkoxides and to chelates formed by the reaction of the alkoxide and an enol such as the enol form of 2,4-pentanedione. It will be understood that the chelate-forming reactant can be in the keto form, an example of such a reactant is acetoacetic ester.

The alcohol is suitably ethanol, other suitable alcohols are methanol, butanol and propanol.

The acid is suitably an inorganic acid, for example HNO₃, HCl or H₂SO₄.

Suitably the concentration of the alkoxides in the precursor solution is in the range of from 0.01 to 0.20 mol per litre of coating solution, and in the precursor solution the molar ratio of water to alkoxide is in the range of from 2 to 15 and the molar ratio of H⁺ to metal is in the range of from 0.01 to 0.10.

The mesoporous support is suitably from an inorganic material, such as alumina, zirconia or porous glass.

## Claims

1. A method of manufacturing a ceramic membrane comprising a mesoporous support and a microporous top layer, which method comprises forming a coating solution from a precursor solution comprising a silicon alkoxide, water, an acid and an alcohol; contacting the mesoporous support with the coating solution; drying the coated mesoporous support; and calcining the dried coated support, wherein the concentration of the silicon alkoxide in the precursor solution is in the range of from 0.01 to 0.20 mol per litre of coating solution.

2. The method according to claim 1, furthermore comprising adding to the precursor solution an alkoxide selected from the group including aluminium alkoxide, titanium alkoxide, and zirconium alkoxide.

3. The method according to claim 2, wherein the concentration of the alkoxides in the precursor solution is in the range of from 0.01 to 0.20 mol per litre of coating solution.

4. The method according to any one of the claims 1-3, wherein in the precursor solution the molar ratio of water to alkoxide is in the range of from 2 to 15.

5. The method according to any one of the claims 1-4, wherein in the precursor solution the molar ratio of H⁺ to metal is in the range of from 0.01 to 0.10.

## Patentansprüche

1. Verfahren zur Herstellung einer keramischen Membran, die aus einem mesoporösen Träger und einer mikroporösen Deckschicht besteht, das darin besteht, daß man aus der Lösung einer Vorstufe, die ein Siliciumalkylat, eine Säure und einen Alkohol enthält, eine Beschichtungslösung herstellt, den mesoporösen Träger mit der Beschichtungslösung kontaktiert, den beschichteten mesoporösen Träger trocknet und den getrockneten beschichteten Träger calciniert, wobei die Siliciumalkylatkonzentration in der Lösung der Vorstufe im Bereich von 0,01 bis 0,20 Mol pro Liter Beschichtungslösung liegt.

2. Verfahren nach Anspruch 1, das weiterhin darin besteht, daß man die Lösung der Vorstufe mit einem Alkylat versetzt, das aus der Gruppe Aluminiumalkylat, Titanalkylat und Zirkoniumalkylat ausgewählt ist.

3. Verfahren nach Anspruch 2, wobei die Konzentration der Alkylate in der Lösung der Vorstufe im Bereich von 0,01 bis 0,20 Mol pro Liter Beschichtungslösung liegt.

4. Verfahren nach einem der Ansprüche 1-3, wobei das Molverhältnis von Wasser zu Alkylat in der Lösung der Vorstufe im Bereich von 2 bis 15 liegt.

5. Verfahren nach einem der Ansprüche 1-4, wobei das Molverhältnis von H⁺ zu Metall in der Lösung der Vorstufe im Bereich von 0,01 bis 0,10 liegt.

## Revendications

1. Procédé de fabrication d'une membrane céramique comprenant un support mésoporeux et une couche de dessus microporeuse, ce procédé comprenant la formation d'une solution de revêtement à partir d'une solution de précurseur comprenant un alcoxyde de silicium, de l'eau, un acide et un alcool; la mise en contact du support mésoporeux avec la solution de revêtement; le séchage du support mésoporeux revêtu; et la calcination du support revêtu séché, dans lequel la concentration de l'alcoxyde de silicium dans la solution de précurseur est dans la gamme de 0,01 à 0,20 mole par litre de solution de revêtement.

2. Procédé selon la revendication 1, comprenant en outre l'addition à la solution de précurseur d'un alcoxyde choisi dans le groupe comprenant un alcoxyde d'aluminium, un alcoxyde de titane et un alcoxyde de zirconium.

3. Procédé selon la revendication 2, dans lequel la concentration des alcoxydes dans la solution de précurseur est dans la gamme de 0,01 à 0,20 mole par litre de solution de revêtement.

4. Procédé selon l'une quelconque des revendications 1-3, dans lequel, dans la solution de précurseur, le rapport molaire de l'eau à l'alcoxyde est dans la gamme de 2 à 15.

5. Procédé selon l'une quelconque des revendications 1-4, dans lequel, dans la solution de précurseur, le rapport molaire de H⁺ au métal est dans la gamme de 0,01 à 0,10.
